# DEMANDE DE BREVET EUROPEEN

(11) **EP 2 363 655 A1**
(43) Date de publication de la demande: **07.09.2011**
(21) Numéro de dépôt: 11155754.2
(22) Date de dépôt: 24.02.2011
(51) Int. Cl.: F24F 1/00, F24F 11/00, F24F 13/08

(54) **Appareil de conditionnement d'air, son procédé de pilotage et structure comprenant un tel appareil**

(30) Priorité: 26.02.2010 FR 1051392
(71) Demandeur: Faure, Thomas M., 38240 Meylan (FR); Faure, Louis-Paul, 38170 Seyssinet Pariset (FR)
(72) Inventeur: Faure, Thomas M., 38240 Meylan (FR); Faure, Louis-Paul, 38170 Seyssinet Pariset (FR)
(74) Mandataire: Prugneau, Philippe

(57) **Abrégé**

Cet appareil (100) comprend tout d'abord une unité de conditionnement d'air (1), laquelle comporte des moyens d'admission d'air, des moyens d'évacuation d'air (10), un ventilateur (7) propre à diriger l'air depuis les moyens d'admission vers les moyens d'évacuation, ainsi que plusieurs équipements de conditionnement placés sur le trajet de l'air entre les moyens d'admission et les moyens d'évacuation, ces équipements comprenant au moins un échangeur thermique (5, 6) et au moins un filtre (8, 9).

Cet appareil comprend en outre un organe de diffusion de l'air (12), cet organe étant dimensionné de telle sorte qu'il permet de transformer un écoulement laminaire (F5) d'un flux d'air en un écoulement turbulent (F6) dudit flux d'air.

## Description

L'invention concerne un appareil de conditionnement d'air, un procédé de pilotage de cet appareil de conditionnement d'air, ainsi qu'une structure comprenant au moins un tel appareil de conditionnement d'air.

Compte tenu de l'évolution actuelle des bâtiments, les besoins en chauffage et en refroidissement tendent à diminuer fortement. En effet, les progrès techniques concernant les matériaux utilisés, en ce qui concerne l'isolation, les vitrages et les ponts thermiques, ont permis de réduire de façon conséquente les déperditions thermiques de ces bâtiments. Désormais, le chauffage et/ou le refroidissement aéraulique, consistant à utiliser le vecteur air pour couvrir l'ensemble de ces déperditions, devient une alternative intéressante pour assurer la totalité du traitement thermique d'un bâtiment.

Ces progrès s'accompagnent cependant d'un problème de qualité d'air intérieur, ou QAI, lequel est très sensible tout en étant souvent négligé. En effet, l'augmentation des niveaux de performances liés à l'étanchéité des bâtiments conduit, le plus souvent, à un défaut de ventilation. En d'autres termes, la plupart des systèmes de conditionnement ne garantissent pas l'obtention d'une qualité de l'air satisfaisante à l'intérieur des locaux.

De façon typique, ces systèmes se contentent de rejeter l'air intérieur vicié, pour le remplacer par de l'air extérieur souvent très pollué. A cet égard, on citera l'appareil commercialisé par la société CIAT sous la référence « Cassette MELODY », lequel comprend un échangeur thermique et un ventilateur. Un tel appareil ne permet pas de garantir la diffusion, dans le local, d'un air de bonne qualité.

De nos jours, les niveaux de Qualité d'Air Intérieur sont définis uniquement de manière quantitative, à savoir que les normes préconisent un débit d'air neuf spécifique, en fonction de la Qualité d'Air souhaitée. Ceci se révèle souvent inadapté, notamment au regard des niveaux de pollution habituels de l'air extérieur, dans les grandes villes et à leur périphérie.

A cet égard la norme européenne EN 13779 de 2007, relative à la ventilation des locaux, préconise de procéder à des séquences de filtration précises, en fonction du niveau de Qualité d'Air Intérieur souhaité, ainsi que du niveau de pollution de l'air neuf extérieur. La filtration la plus poussée, recommandée par cette norme, fait un intervenir une pré-filtre fin de type F7, un filtre fin de type F9 et un filtre à charbon actif, ce qui est nettement insuffisant.

On connaît certains dispositifs, visant à apporter une solution au problème de la qualité d'air intérieur. Ainsi, la société SUPRA a proposé un appareil commercialisé sous la référence EASAIR 420. Cet appareil portatif, qui est muni d'un ventilateur et d'un filtre absolu, est destiné à être placé dans un coin du local à traiter.

Cependant, cette solution implique certaines limités. Ainsi, les appareils décrits ci-dessus n'assurent pas une diffusion efficace de l'air dans la totalité de la pièce, tout en s'accompagnant d'un niveau sonore élevé.

On connaît en outre, par EP-A-1 785 674, un système de ventilation comprenant un module équipé d'un échangeur de chaleur ainsi que de fonctionnalités supplémentaires, telles que différents filtres. Cette solution alternative n'est pas bien adaptée au conditionnement de volumes petits ou moyens, tels que des pièces d'une habitation. De plus, elle est contraignante à mettre en oeuvre et implique une consommation énergétique très importante.

Ceci étant précisé, l'invention vise à remédier aux inconvénients de l'art antérieur évoqués ci-dessus.

De façon plus précise, l'invention vise à proposer un appareil qui, tout en assurant un traitement thermique de l'air, garantit en outre une qualité satisfaisante de ce dernier. Elle vise également à proposer un tel appareil, qui autorise une diffusion efficace de l'air dans le volume de l'espace à traiter, tout en étant maîtrisé en termes de consommation énergétique.

A cet effet, l'invention a pour objet un appareil de conditionnement d'air, comprenant dans un caisson une unité de conditionnement d'air comportant des moyens d'admission d'air, des moyens d'évacuation d'air , un ventilateur propre à diriger l'air depuis les moyens d'admission vers les moyens d'évacuation, plusieurs équipements de conditionnement placés sur le trajet de l'air entre les moyens d'admission et les moyens d'évacuation, ces équipements comprenant au moins un échangeur thermique et au moins un filtre, cet appareil comprenant en outre un organe de diffusion de l'air sous la forme d'une grille fixée en champ libre à une certaine distance du caisson comprise entre 50 et 500mm, cet organe étant dimensionné de telle sorte qu'il permet de transformer un écoulement laminaire d'un flux d'air sortant du caisson en un écoulement turbulent dudit flux d'air.

Selon d'autres caractéristiques de cet appareil :
- l'équipement de conditionnement le plus en aval, parmi lesdits équipements de conditionnement, est propre à générer, en aval de cet équipement le plus en aval, ledit écoulement laminaire du flux d'air ;
- ledit équipement de conditionnement le plus en aval est un filtre particulaire, permettant une filtration particulaire de l'air dont l'efficacité est supérieure ou égale à 95% DOP, de préférence à 99.97% DOP, sur des particules de 0.3 micromètres;
- cet appareil comprend, outre ledit filtre particulaire, un filtre supplémentaire de type chimique ou physico-chimique, notamment à charbon actif, ce filtre supplémentaire étant placé en amont dudit filtre particulaire ;
- le ventilateur est un ventilateur centrifuge, possédant un axe principal sensiblement parallèle à la direction de l'écoulement laminaire du flux d'air, ce ventilateur centrifuge étant propre à diriger l'air radialement contre des parois latérales de l'unité ;
- l'organe de diffusion comprend une partie centrale perforée placée en regard de l'équipement de conditionnement le plus en aval ;
- la partie centrale perforée a une section correspondant sensiblement à celle occupée par l'écoulement laminaire du flux d'air, immédiatement en aval de l'équipement le plus aval ;
- la partie centrale perforée présente les caractéristiques suivantes :
- taux de surface libre entre 15 et 45%, notamment entre 30 et 40%, en particulier voisin de 35% ;
- diamètre équivalent de chaque perforation entre 5 et 200 mm, notamment entre 15 et 50 mm, en particulier voisin de 25 mm;
- pas entre deux perforations adjacentes compris entre 1 et 300 mm, notamment entre 15 et 50 mm, en particulier voisin de 35 mm ;
- la partie centrale perforée est bordée par une partie périphérique pleine formant déflecteur du flux d'air.
- la distance entre l'organe de diffusion et l'équipement le plus en aval est comprise entre 50 et 500 mm, de préférence entre 100 et 200 mm.
- la grille (par exemple de forme rectangulaire) peut être est fixée au caisson de façon amovible par l'intermédiaire de quatre tubes support pouvant laisser passer des câbles d'alimentation électrique.

L'invention a également pour objet un procédé de pilotage de l'appareil ci-dessus, dans lequel on règle le ventilateur, de sorte que l'air s'écoule, immédiatement en aval de l'équipement de conditionnement le plus en aval, parmi lesdits équipements de conditionnement, à une vitesse comprise entre 0 et 5 m/s tout en étant strictement positive, de préférence entre 0.3 et 0.6 m/s.

Selon une caractéristique avantageuse, on détecte la teneur en au moins un polluant dans l'air, en aval de l'organe de diffusion et on augmente le débit d'air généré par le ventilateur lorsqu'au moins une teneur en un polluant est supérieure à une valeur prédéterminée.

L'invention a enfin pour objet une structure, notamment un bâtiment, de type domestique, scolaire, médical ou industriel, ou bien encore un véhicule, comprenant un volume intérieur ainsi qu'au moins un appareil de conditionnement tel que ci-dessus, lequel appareil est propre à souffler de l'air dans au moins une partie dudit volume intérieur.

Selon une caractéristique avantageuse, l'appareil de conditionnement est installé dans une pièce, sensiblement au centre d'une toile, le rapport de surfaces entre la pièce et la toile étant compris entre 1 et 10, de préférence entre 1 et 2, tout en étant strictement supérieur à 1.

L'invention sera encore mieux comprise à la lecture de la description suivante d'un mode de réalisation, donné à titre non limitatif et en référence aux dessins annexés, dans lesquels :
La figure 1 est une vue en perspective, illustrant un appareil de conditionnement d'air selon l'invention ;
La figure 2 est une vue en perspective, depuis l'avant, illustrant le trajet de l'air dans l'appareil de conditionnement selon l'invention ;
Les figures 3 et 4 sont des vues, respectivement de dessus et en coupe longitudinale, illustrant une grille de diffusion appartenant à l'appareil de conditionnement d'air selon l'invention ;
La figure 5 est une vue en perspective, illustrant une première possibilité d'intégration de l'appareil de conditionnement d'air selon l'invention, dans un bâtiment ; et
La figure 6 est une vue en perspective, illustrant une autre possibilité d'intégration de cet appareil de conditionnement dans un bâtiment.

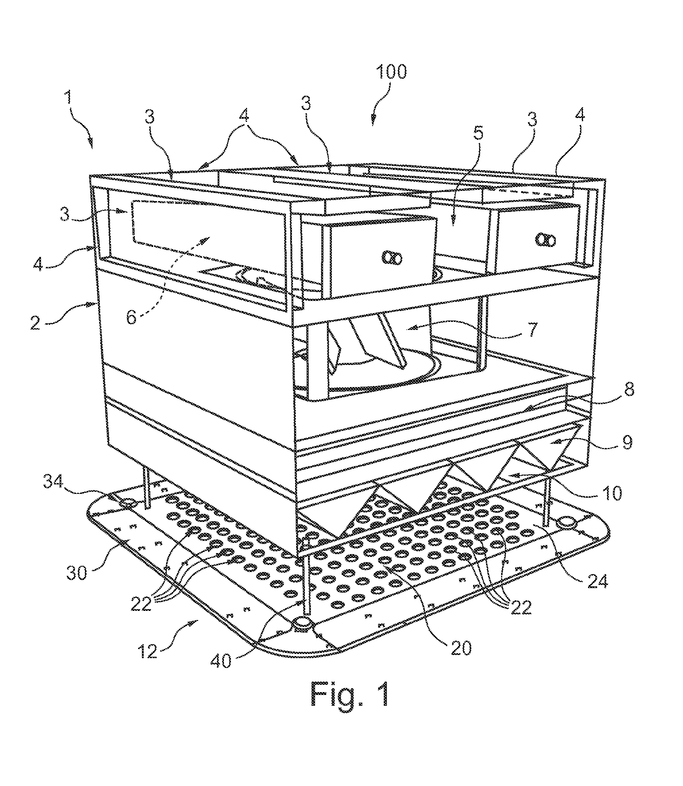

La figure 1 illustre un appareil de conditionnement d'air conforme à l'invention, lequel est désigné dans son ensemble par la référence 100. II comprend tout d'abord une unité 1 de traitement d'air, laquelle comporte un caisson 2 à peu près cubique, formant une enveloppe de cette unité 1. Différents éléments de traitement de l'air, décrits plus en détail dans ce qui suit, sont logés dans ce caisson.

Le caisson est pourvu d'ouvertures 3 d'admission d'air, qui sont prévues au nombre de quatre dans l'exemple illustré. De façon plus précise, on retrouve deux premières ouvertures sur la face supérieure, en référence aux figures, ainsi que deux ouvertures supplémentaires sur des faces latérales opposées du caisson.

Les ouvertures 3 sont associées à des filtres primaires, ou pré-filtres 4, dont le niveau de filtration peut varier en fonction de l'utilisation de l'appareil. A titre d'exemple non limitatif, il peut s'agir de filtres fins, de type F au sens de la norme EN779, dont l'efficacité opacimétrique moyenne est supérieure ou égale à 40%.

Le caisson reçoit tout d'abord deux échangeurs de chaleur, dont l'un 5 fait office de batterie froide et l'autre 6 de batterie chaude. On retrouve également un moto-ventilateur 7, dont on note A l'axe principal, qui est vertical sur les figures. Ce ventilateur aspire l'air via les ouvertures d'entrée 3 et le souffle en direction des parois latérales 2' du caisson, disposées en regard.

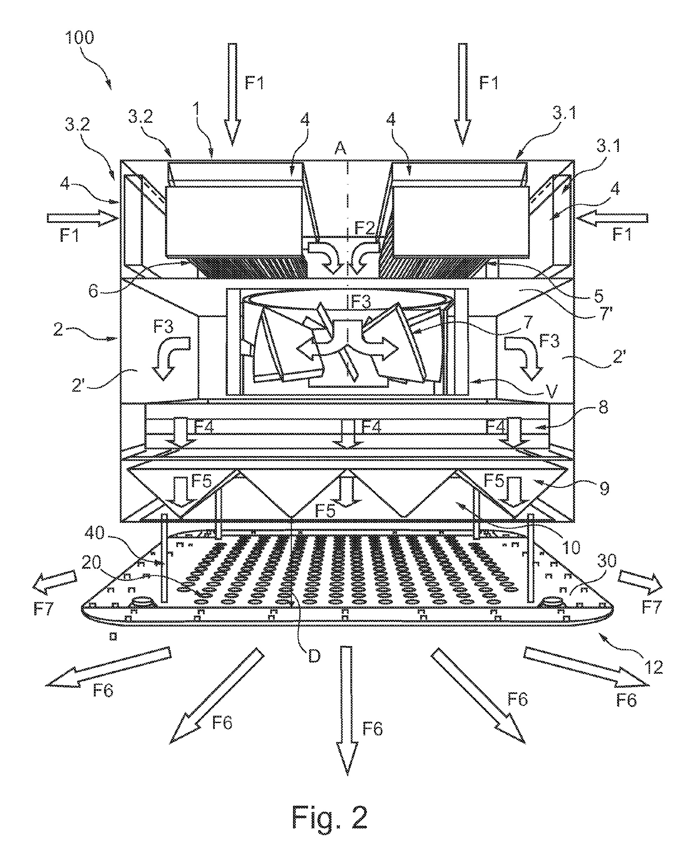

On notera que, sur la figure 2, les parois latérales non référencées du caisson, autres que celles 2', sont ajourées. Cette représentation sert uniquement à la clarté du dessin puisque, dans la réalité technique, ces parois supplémentaires sont aussi de type « plein », comme les parois 2'.

En outre, il est prévu deux étages de filtration, à savoir tout d'abord un filtre à charbon actif 8 et un filtre terminal 9. Ces deux filtres occupent sensiblement toute la section intérieure du caisson, à savoir que l'ensemble de l'air soufflé par le ventilateur 7 est amené à les traverser.

Le filtre 8, de type connu en soi, permet une épuration de l'air de nature chimique et physico-chimique. II peut être également imprégné de gels spécifiques, visant à l'éradication de contaminants précis.

Le filtre 9, de nature particulaire, est avantageusement de type HEPA (High Efficiency Particulate Air filter) ou ULPA (Ultra Low Penetration Air filter). II appartient à la gamme des filtres absolus, à savoir qu'il permet une filtration particulaire de l'air dont l'efficacité est supérieure ou égale à 95% DOP, de préférence à 99.97% DOP, sur des particules de 0.3 micromètres. Cette efficacité est basée sur le test classique DOP, selon la méthode décrite dans la norme ASTM (American Society for Testing Materials) D 2986-71. L'efficacité de 95% correspond à une classification H10, et celle de 99.97% à une classification H11.

De façon optionnelle, l'appareil conforme à l'invention peut être équipé de fonctionnalités supplémentaires, non représentées. Il peut s'agir, entre autres, d'une épuration biologique, de type notamment virale ou microbienne, via un système de lampes à ultra-violets, ou bien encore d'une ionisation de l'air via un système de génération d'ions.

La face inférieure du caisson est ajourée quasiment de façon intégrale, de façon à définir une ouverture 10 d'évacuation de l'air, hors de ce caisson. A titre d'exemple, la section de cette ouverture d'évacuation est par exemple comprise entre 100 par 100 mm, et 1500 par 1500 mm, notamment voisine de 500 mm par 500 mm.

En regard de cette ouverture 10, il est prévu une grille 12 dont la fonction sera décrite plus en détail dans ce qui suit. En termes structurels, cette grille est formée par une plaque, partiellement perforée, dont l'épaisseur est comprise entre 1 et 50 mm, notamment entre 10 et 30 mm. Cette plaque peut être réalisée en tout matériau de résistance mécanique appropriée, comme un acier ou du PVC.

Cette grille 12 comprend tout d'abord une partie centrale 20, dont les dimensions sont voisines de celles de l'ouverture d'évacuation 10, évoquée ci-dessus. En d'autre termes, vues selon la direction de l'écoulement de l'air, à savoir de dessus sur les figures, la section de passage de l'air à la sortie du filtre 9 et cette partie centrale 20 sont sensiblement superposées. Cette partie 20 est creusée de perforations 22 régulièrement réparties, qui débouchent des deux côtés de la grille.

On va maintenant donner, à titre d'exemple avantageux mais en aucun cas limitatif, quelques dimensions caractéristiques de chaque alvéole :
- Taux de surface libre, à savoir rapport entre la surface perforée, occupée par les perforations, et la surface totale de la partie 20, compris entre 15 et 45%, notamment entre 30 et 40%, en particulier voisin de 35% ;
- Diamètre équivalent d de chaque perforation entre 5 et 200 mm, notamment entre 15 et 50 mm, en particulier voisin de 25 mm. Ce diamètre équivalent correspond au diamètre, dans le cas avantageux où les perforations sont circulaires. Si tel n'est pas le cas, ce diamètre équivalent correspond au diamètre d'un cercle de même surface que la perforation considérée ;
- Pas P, à savoir entraxe entre deux perforations adjacentes, entre 1 et 300mm, notamment entre 10 et 100 mm, en particulier voisin de 35 mm.

De façon avantageuse, les perforations sont agencées de façon à former une croix, en vue de dessus. En d'autres termes, dans les coins de la partie centrale, on trouve alors des zones pleines 24, dépourvues de perforations, dont la surface est faible par rapport à celle de cette partie centrale. Ceci permet une diffusion optimale du flux d'autre et, comme on le verra dans ce qui suit, l'intégration d'organes de support.

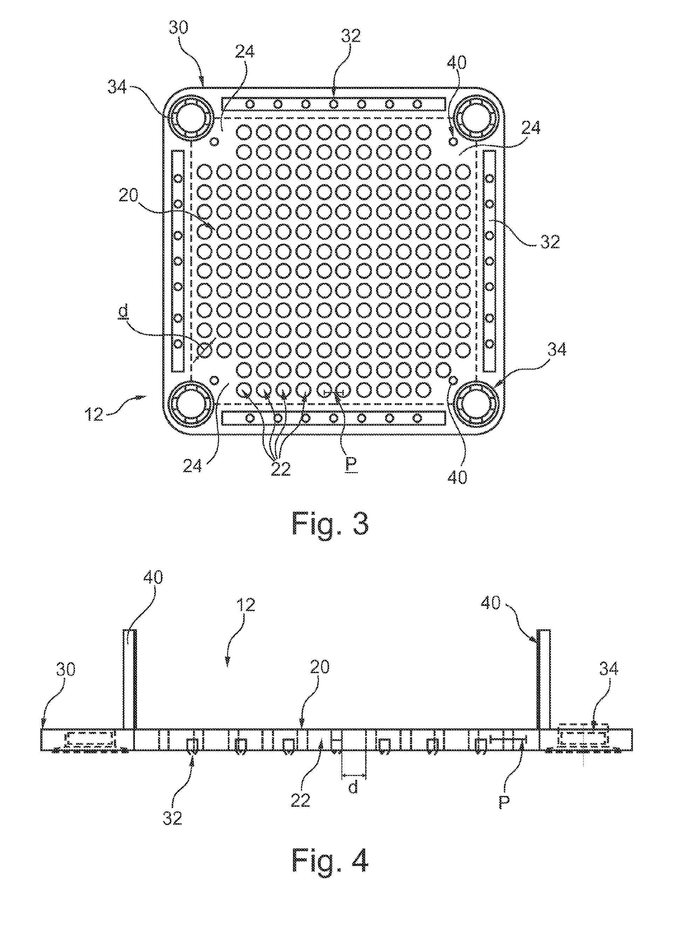

La partie centrale 20, délimitée sur la figure 3 par des traits pointillés, est bordée par une partie périphérique 30, formant un bandeau. Ce bandeau présente des dimensions, dans le plan principal de la grille, qui sont bien inférieures à celles de la partie centrale. A titre d'exemple, le rapport entre la surface totale de la partie 20 et la surface totale du bandeau 30 est compris entre 1.5 et 10, de préférence entre 2 et 4. De façon typique, si la partie centrale 20 présente une section de 500 mm par 500 mm, l'ajout du bandeau porte les dimensions totales de la grille à 600 mm par 600 mm.

Ce bandeau 30 assure une double fonction, à savoir tout d'abord une dispersion du flux d'air, transversalement par rapport à la direction originelle, à savoir horizontalement sur les figures. De la sorte, la diffusion globale de l'air, dans la pièce, est améliorée.

Par ailleurs, le bandeau 30 permet d'intégrer des fonctionnalités supplémentaires. Dans l'exemple illustré, on retrouve des rails 32 de DEL (diodes électroluminescentes), ainsi que différents haut-parleurs 34. Le bandeau assure en outre l'intégration des câbles d'alimentation associés, qui ne sont pas illustrés, ainsi que d'autres accessoires éventuels, également non représentés.

Enfin, la grille 12 est équipée d'organes de support 40, conformés de façon tubulaire. Ces tubes 40, prévus au nombre de quatre dans l'exemple, assurent une fixation amovible de la grille par rapport au caisson. A cet égard, ils sont par exemple associés à des systèmes vis et écrou, ce qui permet une maintenance aisée et permet de positionner la grille sur différents caissons.

Les tubes 40 autorisent également le passage des câbles d'alimentation des DEL 32 et des haut-parleurs 34. De façon avantageuse, ce câblage peut intégrer un système de connexion rapide, de type mâle et femelle, afin de permettre un branchement et un débranchement rapides et aisés.

L'utilisation de l'appareil de conditionnement d'air, décrit ci-dessus, va maintenant être explicitée dans ce qui suit, en référence notamment à la figure 2. Cette dernière illustre en particulier le trajet de l'air, au moyen de différentes flèches.

L'air est aspiré au travers des différentes ouvertures d'admission 3, est soumis à une filtration préalable dans les filtres 4, puis est dirigé vers les unités de traitement thermique 5 et 6 (flèches F1). A cet égard, on peut prévoir d'utiliser des clapets non représentés, permettant de diriger préférentiellement l'air vers l'une ou l'autre de ces unités, selon les besoins.

Ainsi, si on désire réchauffer l'air, on ferme les clapets des ouvertures, notées 3.1, associées à l'unité de rafraichissement 5, et on ouvre les clapets des ouvertures, notées 3.2, associées à l'unité de chauffage 6. Ceci permet à la totalité de l'air de traverser uniquement cette dernière unité. En revanche, si on désire refroidir l'air, les clapets sont manoeuvrés de façon inverse, de sorte que l'air traverse uniquement l'unité 5. On peut également prévoir un système d'asservissement, intégrant des capteurs placés dans le local, en vue de la commande de ces différents clapets.

L'unité de rafraîchissement 5 peut fonctionner en tant qu'évaporateur de machine frigorifique, ou en tant qu'évaporateur de Pompe A Chaleur réversible (PAC). Dans ce dernier cas, l'unité de chauffage 6 est alors le condenseur de cette Pompe A Chaleur réversible. Dans l'autre cas, l'unité de chauffage 6 est alors une batterie électrique sécurisée.

A titre de variante non représentée, on peut prévoir que l'air circule d'abord au travers de l'unité de rafraichissement, puis de l'unité de chauffage. Ceci induit alors la formation de condensats, en aval de l'unité de rafraichissement, qui peuvent le cas échéant être évacués avant que l'air ne soit admis dans l'unité de chauffage. De la sorte, l'hygrométrie de l'air peut être régulée.

L'air est ensuite aspiré au travers du pavillon 7' du ventilateur 7, selon les flèches F2, puis se trouve soufflé par celui-ci, selon les flèches F3, de façon radiale en référence à l'axe principal du ventilateur. Le débit d'air, soufflé par le ventilateur, dépend du volume du local à traiter, ainsi que du taux de renouvellement d'air choisi. De façon avantageuse, ce débit est compris entre 10 et 1000 m³/h, en particulier entre 50 et 500 m³/h. A titre d'exemple purement indicatif, pour une pièce de 20 m³ et un taux de renouvellement de 8, le débit imparti sera typiquement de 160 m³/h.

L'action de soufflage du ventilateur, combinée à l'action des filtres qui ont tendance à retenir l'air, induisent une mise en pression du volume V, matérialisant le compartiment dans lequel est reçu le ventilateur. Ce compartiment est bordé axialement par le pavillon précité 7' et par le filtre amont 8, ainsi que radialement par les parois 2'. La différence de pressions, entre ce compartiment et le local à conditionner, entraîne le passage de l'air au travers des filtres successifs 8 (flèches F4) puis 9 (flèches F5).

En aval du filtre particulaire 9, c'est-à-dire au voisinage de l'ouverture d'évacuation, l'air s'écoule de façon laminaire au sens de l'invention, notamment du fait de la nature même de ce filtre aval. Ceci signifie que le flux d'air est unidirectionnel, à savoir qu'il est composé d'une multiplicité de filets parallèles, qui s'écoulent verticalement sur les figures. La vitesse de ce flux d'air est avantageusement comprise entre 0 et 5 m/s tout en étant strictement positive, de préférence entre 0.3 et 0.6 m/s. Il est possible de réguler la valeur de cette vitesse, en modifiant la vitesse de rotation du ventilateur 7.

On note D la distance séparant, selon la direction d'écoulement de l'air, le débouché du filtre aval 9 et la grille 12. De façon avantageuse, cette distance est comprise entre 50 et 500 mm, de préférence entre 100 et 200 mm. Cette distance entre le filtre et la grille est définie en référence aux plans respectifs, de sortie du filtre 9 et d'entrée de la grille 12. Le choix d'une telle plage contribue à stabiliser l'écoulement unidirectionnel de l'air, tout en évitant qu'il ne soit instable.

Enfin, au niveau de la grille 12, l'air s'écoule pour partie au travers des orifices et, pour une autre partie, le long du bandeau, qui assure ainsi une fonction de déflecteur. La perturbation induite par le passage dans les orifices contribue à orienter les filets d'air de façon oblique, selon les flèches F6. De plus, la présence du bandeau apporte une composante transversale au flux d'air, matérialisée par les flèches F7. A cet égard, on notera que l'épaisseur de la plaque, dont on a donné des valeurs préférées ci-dessus, permet de réaliser avantageusement ces deux fonctions.

De la sorte le flux d'air de type laminaire, arrivant sur la grille, éclate et se trouve réparti par celle-ci, selon un écoulement aval de type turbulent, à savoir multidirectionnel. Ceci permet une diffusion satisfaisante de l'air, dans un local de section bien plus importante que celle du caisson. La vitesse de l'air, en aval de cette grille, est sensiblement inchangée par rapport à sa vitesse en amont, dont on a donné des valeurs préférées ci-dessus.

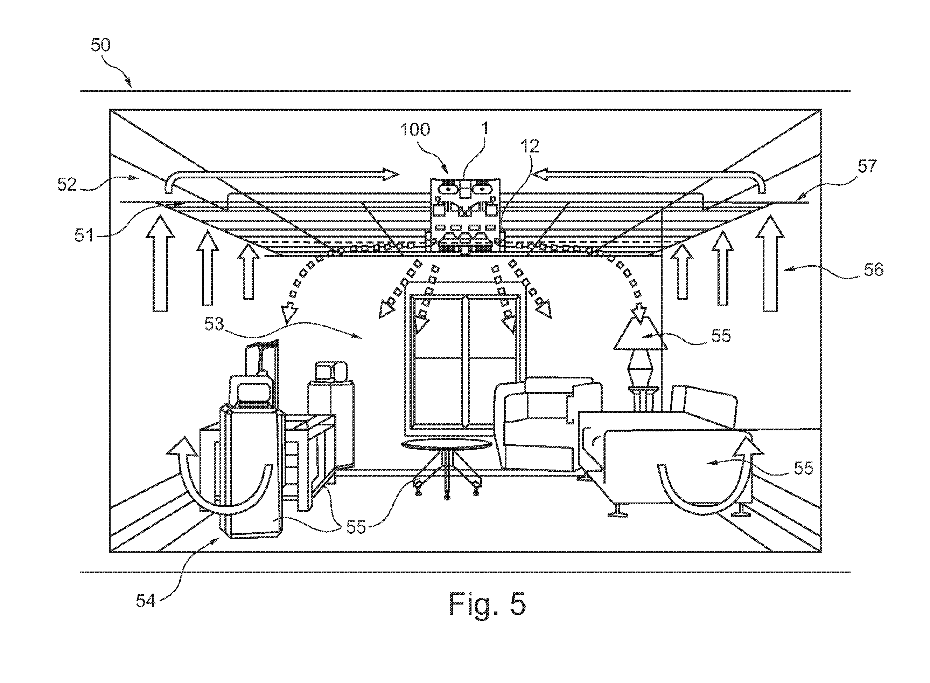

La figure 5 illustre l'implantation d'un appareil de conditionnement conforme à l'invention, dans un salon 50 de maison individuelle. Ce dernier est équipé d'un faux plafond 51 délimitant, de façon habituelle, une zone 52 formant plénum, ainsi qu'une zone 53 formant le volume habitable.

Les flèches pointillées illustrent le trajet d'air propre, c'est-à-dire conditionné par l'appareil 100 de l'invention, puis diffusé par la grille 12. Comme le montre la figure 5, la présence de la grille assure une diffusion de l'air sur sensiblement la totalité de la section de la pièce. Dans ces conditions, au fur et à mesure de sa progression vers le sol 54, l'air tend à créer un effet piston, de sorte qu'il est susceptible de traiter quasiment la totalité du volume de la pièce.

Ceci permet notamment à l'air d'entraîner, lors de son passage, les polluants initialement présents dans la pièce, en particulier sur le mobilier matérialisé par la référence 55. Ce mode de balayage du local est bien plus efficace que dans l'art antérieur, en particulier celui s'appuyant sur l'effet COANDA.

On conçoit donc que, lors de son arrivée au voisinage du sol, l'air est contaminé par les polluants qu'il a entraînés. Puis, comme l'illustrent les flèches en traits pleins, l'air remonte le long des parois latérales 56 de la pièce, avant d'être admis dans le faux-plafond par des ouvertures 57 appropriées. II est ensuite aspiré dans l'unité 1, de façon à traverser le ou les échangeur(s) 5 et/ou 6, puis les filtres 8 et 9. Enfin cet air, ainsi traité thermiquement et épuré, est à nouveau soufflé dans le volume habitable 52, de façon similaire à ce qui a été décrit ci-dessus.

L'invention n'est pas limitée à l'exemple décrit et représenté.

Ainsi, dans le mode de réalisation décrit en référence à la figure 5, l'appareil de conditionnement assure uniquement le recyclage de l'air présent dans la pièce à traiter. Par conséquent, il est mis en oeuvre en parallèle avec un système classique de ventilation de l'ambiance. Cependant, on peut aussi prévoir que l'appareil de l'invention est couplé à ce système de ventilation. Dans ces conditions, son entrée est mise en communication avec une gaine d'apport d'air extérieur, traité par cet appareil avant d'être soufflé dans le local.

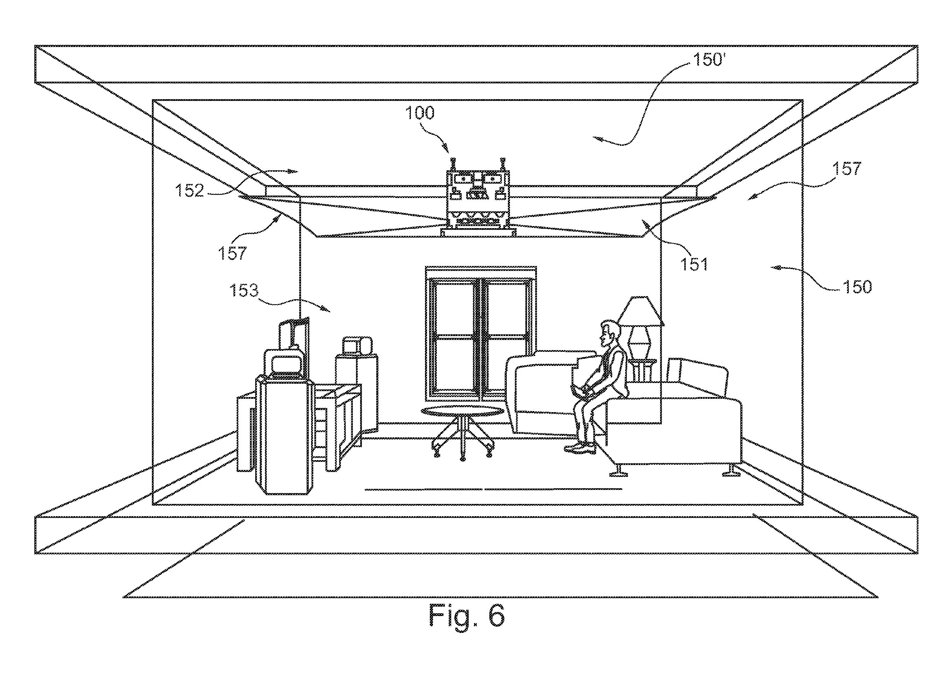

Dans le mode de réalisation décrit en référence à la figure 5, l'appareil de conditionnement est intégré dans un faux-plafond. Cependant, on peut aussi prévoir de le suspendre directement au niveau du plafond. Une autre variante est illustrée à la figure 6, sur laquelle les éléments analogues à ceux de la figure 5 y sont affectés des mêmes numéros de référence, augmentés de 100.

Sur cette figure 6, l'appareil 100 est suspendu au plafond 150' de la pièce 150 en étant associé à une toile 151, dite de reprise. Cette toile est réalisée en tout matériau approprié, tel que par exemple du polyester, du polyuréthane ou du polyéthylène. L'appareil est disposé sensiblement au centre de cette toile, dans un souci de symétrie de l'écoulement aéraulique.

La toile 151, qui est solidarisée à l'appareil 100 et/ou aux parois latérales de la pièce, par exemple par un système d'arceaux ou de baleines en fibres de verre, s'étend au-dessus du plan de sortie du filtre aval 9. Elle délimite une zone supérieure 152, une zone inférieure 153, ainsi qu'une zone périphérique 157, s'étendant entre les parois latérales en regard de cette toile et de la pièce. Dans un plan transversal, en l'occurrence horizontal sur la figure, le rapport entre la surface totale de la pièce et la surface totale occupée par la toile est compris entre 1 et 2, de préférence entre 1 et 10, tout en étant strictement supérieur à 1.

Comme dans l'exemple de la figure 5, l'air est diffusé par la grille en direction du sol, puis remonte le long des parois latérales. II traverse ensuite la zone périphérique 157, avant d'être à nouveau admis à l'entrée de l'appareil de conditionnement 100.

Le mode de réalisation de la figure 6 présente des avantages spécifiques. Ainsi, il représente un bon compromis, lorsque l'installation de l'appareil de conditionnement, dans un faux-plafond, n'est pas possible.

En effet, la toile de reprise augmente les performances aérauliques de l'appareil, par comparaison avec le cas où ce dernier est suspendu directement, sans utilisation d'un faux-plafond. De plus, une telle toile implique un coût additionnel relativement modeste. En outre, elle s'accompagne d'un effet esthétique, puisqu'elle peut être imprimée au moyen de motifs décoratifs.

Dans les modes de réalisation décrits en référence aux figures 5 et 6, l'appareil de conditionnement équipe une habitation domestique. Cependant, l'invention trouve son application au conditionnement de l'air présent dans d'autres types de locaux. Ainsi, à titre non limitatif, on peut citer les bâtiments du sectaire tertiaire, tels les bureaux ou les lieux d'enseignement, les bâtiments à vocation médicale, tels les hôpitaux, cliniques ou maisons de retraite, ou encore les locaux industriels de type standard ou à ambiance maîtrisée. L'invention vise également le conditionnement d'air dans d'autres types de structure, comme les véhicules de transport, que ce soit individuel ou en commun, de nature aérienne, ferroviaire, maritime ou automobile.

A titre de variante supplémentaire, non représentée, on peut prévoir d'installer, dans le local à conditionner, au moins un capteur apte à détecter la teneur en au moins un polluant. A titre non limitatif, il peut s'agir du monoxyde ou du dioxyde de carbone CO ou CO₂, des composés organiques volatils COV, de certains acides ou de certains solvants. Ces capteurs sont en outre reliés à une unité de commande, placée par exemple sur un côté du caisson.

Lorsqu'au moins un capteur détecte que la teneur en au moins un polluant est supérieure à une valeur prédéterminée, l'unité commande une augmentation de la vitesse de rotation du ventilateur. Ceci a pour effet d'augmenter, de façon combinée, le débit d'air et son taux de renouvellement, de façon à assurer un traitement plus poussé de l'air et à faire baisser la teneur en polluants.

On peut également prévoir d'installer, dans le local à conditionner, un capteur de présence. Lorsque ce dernier détecte l'arrivée d'une personne, il met en marche le ventilateur, ou bien augmente la vitesse de rotation de ce dernier, respectivement de façon à initier le conditionnement de l'air, ou bien à en améliorer la qualité.

L'invention permet d'atteindre les objectifs précédemment mentionnés.

En effet, l'invention permet tout d'abord un conditionnement satisfaisant de l'air, tant en termes de traitement thermique que d'amélioration de la qualité de cet air.

Par ailleurs, l'invention assure une diffusion efficace de l'air, notamment grâce à la présence de la grille qui est utilisée. A cet égard, il est à noter que la section de l'appareil conforme à l'invention peut être bien inférieure à celle du local à conditionner, grâce à la qualité de cette diffusion.

L'invention est tout particulièrement avantageuse, en termes de maîtrise énergétique. En effet, le choix de filtres puissants contribue à augmenter la perte de charge, ce qui est compensé par le choix de faibles vitesses d'écoulement d'air. Dans ces conditions, il est possible de faire appel à un ventilateur de taille relativement réduite, ce qui limite la consommation énergétique.

L'appareil de conditionnement, conforme à l'invention, est ainsi susceptible de traiter efficacement une pièce de 25 m³, moyennant une consommation énergétique de seulement deux ampoules électriques standard. Cet appareil peut être alimenté par toute source appropriée, convenant à cette gamme énergétique. On citera notamment le réseau électrique traditionnel, ou encore une alimentation de type photovoltaïque.

Enfin, l'invention autorise une grande modularité. En effet, en équipant différentes pièces avec plusieurs appareils conformes à l'invention, il est possible de les piloter indépendamment, afin de faire varier les paramètres de conditionnement de l'air d'une pièce à l'autre. Par ailleurs, l'achat de ces appareils peut être échelonné dans le temps, par comparaison avec une installation domestique unique.

## Revendications

1. Appareil de conditionnement d'air (100), comprenant dans un caisson une unité de conditionnement d'air (1) comportant des moyens d'admission d'air (3), des moyens d'évacuation d'air (10), un ventilateur (7) propre à diriger l'air depuis les moyens d'admission vers les moyens d'évacuation, plusieurs équipements de conditionnement placés sur le trajet de l'air entre les moyens d'admission et les moyens d'évacuation, ces équipements comprenant au moins un échangeur thermique (5, 6) et au moins un filtre (8, 9), cet appareil comprenant en outre un organe de diffusion de l'air (12) sous la forme d'une grille fixée en champ libre à une certaine distance (D) du caisson comprise entre 50 et 500mm, cet organe étant dimensionné de telle sorte qu'il permet de transformer un écoulement laminaire d'un flux d'air sortant du caisson en un écoulement turbulent dudit flux d'air.

2. Appareil selon la revendication 1, dans lequel l'équipement de conditionnement le plus en aval (9), parmi lesdits équipements de conditionnement, est propre à générer, en aval de cet équipement le plus en aval, ledit écoulement laminaire du flux d'air.

3. Appareil selon la revendication 2, dans lequel ledit équipement de conditionnement le plus en aval est un filtre particulaire (9), permettant une filtration particulaire de l'air dont l'efficacité est supérieure ou égale à 95% DOP, de préférence à 99.97% DOP, sur des particules de 0.3 micromètres.

4. Appareil selon la revendication 2 ou 3, comprenant, outre ledit filtre particulaire (9), un filtre supplémentaire (8) de type chimique ou physico-chimique, notamment à charbon actif, ce filtre supplémentaire étant placé en amont dudit filtre particulaire.

5. Appareil selon l'une des revendications 2 à 4, dans lequel le ventilateur est un ventilateur centrifuge (7), possédant un axe principal (A) sensiblement parallèle à la direction de l'écoulement laminaire du flux d'air, ce ventilateur centrifuge étant propre à diriger l'air radialement contre des parois latérales (2') de l'unité (1).

6. Appareil selon l'une des revendications précédentes, dans lequel l'organe de diffusion (12) comprend une partie centrale perforée (20), placée en regard de l'équipement de conditionnement le plus en aval (9).

7. Appareil selon les revendications 2 et 6, dans lequel la partie centrale perforée (20) a une section correspondant sensiblement à celle occupée par l'écoulement laminaire du flux d'air, immédiatement en aval de l'équipement le plus en aval (9).

8. Appareil selon la revendication 6 ou 7, dans lequel la partie centrale perforée (20) présente les caractéristiques suivantes :
- taux de surface libre entre 15 et 45%, notamment entre 30 et 40%, en particulier voisin de 35% ;
- diamètre équivalent (d) de chaque perforation (22) entre 5 et 200 mm, notamment entre 15 et 50 mm, en particulier voisin de 25 mm;
- pas (p) entre deux perforations adjacentes compris entre 1 et 300 mm, notamment entre 10 et 100 mm, en particulier voisin de 35 mm.

9. Appareil selon l'une des revendications 6 à 8, dans lequel la partie centrale perforée (20) est bordée par une partie périphérique pleine (30), formant déflecteur du flux d'air.

10. Appareil selon l'une des revendications 1 à 9, dans lequel la distance (D) entre l'organe de diffusion (12) et l'équipement le plus en aval (9) est comprise entre 50 et 500 mm, de préférence entre 100 et 200 mm.

11. Appareil selon l'une des revendications 1 à 10, dans lequel ladite grille est fixée au caisson de façon amovible.

12. Appareil selon l'une des revendications 1 à 11, dans lequel ladite grille de forme rectangulaire est fixée au caisson par l'intermédiaire de quatre tubes support pouvant laisser passer des câbles d'alimentation électrique.

13. Procédé de pilotage de l'appareil (A) conforme à l'une des revendications précédentes, dans lequel on règle le ventilateur (7), de sorte que l'air s'écoule, immédiatement en aval de l'équipement de conditionnement le plus en aval (9), parmi lesdits équipements de conditionnement, à une vitesse comprise entre 0 et 5 m/s tout en étant strictement positive, de préférence entre 0.3 et 0.6 m/s.

14. Procédé de pilotage selon la revendication précédente, dans lequel on détecte la teneur en au moins un polluant dans l'air, en aval de l'organe de diffusion (12), et on augmente le débit d'air généré par le ventilateur (7), lorsqu'au moins une teneur en un polluant est supérieure à une valeur prédéterminée.

15. Structure, notamment bâtiment, de type domestique, scolaire, médical ou industriel, ou bien encore véhicule, comprenant un volume intérieur (52) ainsi qu'au moins un appareil de conditionnement (100) selon l'une des revendications 1 à 12, lequel appareil est propre à souffler de l'air dans au moins une partie dudit volume intérieur.

16. Structure selon la revendication 15, dans laquelle l'appareil de conditionnement (100) est installé dans une pièce, sensiblement au centre d'une toile (151), le rapport de surfaces entre la pièce et la toile étant compris entre 1 et 2, de préférence entre 1 et 10, tout en étant strictement supérieur à 1.
